# FASCICULE DE BREVET EUROPEEN

(11) **EP 2 424 376 B1**
(45) Date de publication et mention de la délivrance du brevet: **24.04.2013**
(21) Numéro de dépôt: 10715859.4
(22) Date de dépôt: 29.04.2010
(51) Int. Cl.: A21D 13/00, A23L 1/307

(54) **PÂTE POUR PÂTISSERIE**
TEIG FÜR GEBÄCK
PASTRY DOUGH

(30) Priorité: 29.04.2009 FR 0952844
(43) Date de publication de la demande: 07.03.2012
(73) Titulaire: SAS Genialis, 18250 Henrichemont (FR)
(72) Inventeur: DESJARDINS-LAVISSE, Isabelle, F-18250 Henrichemont (FR); FANNI, Jacques, F-54600 Villers Les Nancy (FR)
(74) Mandataire: Office Freylinger
(86) Numéro de dépôt international: PCT/EP2010/055847
(87) Numéro de publication internationale: WO 2010/125156

(56) Documents cités:
- EP-A1- 0 007 054
- EP-A1- 0 553 389
- EP-A1- 1 356 735
- WO-A1-97/42834
- FR-A1- 2 589 680
- US-A- 4 238 519

## Description

### Domaine technique

La présente invention concerne les pâtes pour pâtisseries à teneur réduite en sucre et leur réalisation, notamment la fabrication de macarons à coques au goût totalement salé.

### Etat de la technique

Les pâtisseries comportent un taux élevé de sucre et/ou de matières grasses qui confèrent à ces produits une appétence très élevée. Ces ingrédients, notamment le sucre, s'avèrent être structurants au terme des réactions de cuisson des produits de pâtisserie ainsi obtenus. Il est donc extrêmement difficile de se passer de leur utilisation, car ils ne participent pas seulement très activement aux propriétés organoleptiques des produits, mais aussi à leur structuration et leur aspect. Ainsi, seuls des produits associant saveurs sucrées et saveurs salées sont réalisés avec les méthodes de préparation conventionnelles.

Il existe toutefois un certain nombre de préparations qui autorisent une certaine souplesse de formulation sans la perte de structure. Il s'agit de produits communément appelés meringues ou encore de macarons.

La meringue est une pâtisserie très légère et très fine à base d'un mélange de blancs d'oeufs et de sucre, que l'on fait sécher au four très doucement. Le macaron, quant à lui, est un petit gâteau granuleux et moelleux à la forme arrondie, d'environ 3 à 5 cm de diamètre. Dérivé de la meringue, il est fabriqué à partir de poudre de fruits secs, notamment d'amandes ou de noisettes, de sucre glace, de sucre et de blancs d'oeufs. La pâte ainsi préparée est déposée sur une plaque de four et cuite. Ceci lui donne sa forme particulière d'une pâte figée et dorée à la cuisson.

Plusieurs brevets se proposent de modifier la formulation originale de produits proches des macarons pour parvenir à une mise en oeuvre simplifiée, notamment au niveau industriel. On trouve ainsi dans le brevet FR 2586901 une préparation dans laquelle sont utilisées 25 à 30% de châtaignes cuites et moulues avec du sucre en poudre, de l'amidon et du sucre inverti. Dans le brevet FR 2770092, il s'agit d'une composition prête à l'emploi pour la fabrication de meringues comprenant 25 à 40% d'eau, 50 à 75% de sucre, 5 à 15% de blanc d'oeufs, ainsi que divers additifs, stabilisants et colorants. L'invention décrite dans le brevet FR 2690313 propose de préparer une meringue de façon classique et de l'utiliser ensuite à l'état pulvérisé pour réaliser une pâte légère destinée à la préparation de biscuits allégés. Un autre brevet (FR 2589680) décrit une préparation permettant d'obtenir un gâteau dont la texture est intermédiaire entre la meringue et le boudoir. Un brevet très récent (EP 2007216) décrit la fabrication industrialisée et continue d'une meringue destinée à la fabrication de barres destinées à être recouvertes par du chocolat. L'utilisation de pectine comme agent gélifiant est également décrite dans le brevet GB 282923 pour la fabrication de meringues et de marshmallows. L'utilisation de fructose en quantité suffisamment importante pour permettre la conservation satisfaisante des produits obtenus, notamment des macarons est décrite dans le brevet FR 2591859. Il existe également un brevet datant de 1950 (GB637506) qui se propose de mettre en oeuvre une préparation dépourvue de blanc d'oeuf en la remplaçant par de la poudre de lait écrémé en milieu acide et contenant, en outre, du bicarbonate de sodium. Une variante plus récente de cette invention est décrite dans le brevet GB 1133747 où de l'amidon prégélatinisé de tapioca ou de pomme de terre est associé à du caséinate de sodium et à de la poudre de lait écrémé, en présence d'une gomme cellulosique (methylcellulose et composés connexes). Une préparation décrite dans un brevet très ancien (1903) décrit pour sa part l'utilisation d'un "mucilage" (un dérivé de gomme cellulosique) comme moyen de glaçage de macarons (GB190226434). Une préparation originale, mais complexe, utilisant du lactosérum est décrite dans le brevet GB 701665 où ledit lactosérum est porté successivement à pH 9-10,5, avant d'être filtré pour éliminer le précipité. Le filtrat est porté à un pH élevé (jusqu'à pH 11-12), puis il est concentré jusqu'à contenir 50 à 55% de matière sèche, ce qui fait notamment apparaître des cristaux de lactose. La charge minérale du concentré est éliminée par électrodialyse, puis le produit est séché selon la technique dite de spray-drying. La poudre obtenue peut servir à la confection de meringues et de macarons.

Toutefois, aucun de ces brevets ne décrit une formulation qui permettrait de réduire considérablement la quantité de sucre mise en oeuvre dans les produits de type meringue ou macaron. En particulier, aucun de ces brevets ne permet de réaliser une meringue salée ou un macaron salé. Outre l'effet nutritionnel, le sucre est indispensable à la structuration du produit et il n'existe à ce jour aucune formulation à si faible teneur en sucre permettant d'obtenir un produit au goût entièrement salé tout en gardant l'aspect et les caractéristiques proches des macarons sucrés : coque lisse, plate, brillante, présentant une collerette à sa base, craquante en surface et moelleuse à l'intérieur et ce même après congélation du macaron assemblé (deux coques liées par un appareil intérieur).

Aujourd'hui, les macarons sucrés traditionnels sont préparés comme suit. Les blancs sont tout d'abord montés en neige puis rendus fermes par ajout de sucre. On parle de meringue pour cette première préparation. De la poudre d'amande très fine et du sucre glace sont mélangés et tamisés le cas échéant avec d'autres ingrédients éventuels influençant le goût et la couleur (poudre de cacao par exemple). Ce mélange et les blancs fermes sont ensuite mélangés jusqu'à obtenir une pâte d'aspect lisse et brillante. Cette dernière étape de mélange est appelé « macaronage ». Après cuisson de la pâte ainsi préparée, dressée à la poche en petits dômes sur du papier cuisson, les coques obtenues sont assemblées par deux en les liant avec une préparation épaisse ou « fourrage» de type ganache. Selon la préparation utilisée, le produit fini peut être stocké au congélateur soit sans altération de ses propriétés organoleptiques, soit avec une altération qui permet d'obtenir les propriétés finales telles que décrites plus haut (fourrage intérieur « mouille » les coques, les rendant moelleuses à coeur mais sans altérer les autres propriétés).

### Objet de l'invention

L'objet de la présente invention est par conséquent de présenter une pâte pour macaron avec une quantité de sucre réduite permettant de réaliser le cas échéant un macaron au goût totalement salé.

### Description générale de l'invention

Afin de résoudre le problème mentionné ci-dessus, la présente invention propose une pâte pour pâtisseries de type meringue ou macaron comprenant pour 100g de blanc d'oeuf:
- entre 25 et 110 g de maltodextrine ;
- entre 2 et 10 g de protéines moussantes ;
- entre 0,5 et 70 g de sucre glace, de glucose cristallisé, de fructose cristallisé et/ou leur mélange ;
- 0,2 à 3 g de chlorure de sodium
- et optionnellement entre 90 et 160g de poudre d'amandes ;

La pâte permet d'obtenir des pâtisseries de type meringue ou macaron soit « à teneur en sucre réduite » soit des produits « salés » c'est-à-dire dont on ne perçoit que le goût salé, le goût sucré étant totalement masqué.

Ces pâtes sont conformes à ce qui peut être obtenu avec des procédés de préparation conventionnels et est dû à l'interaction des maltodextrines et des protéines moussantes qui remplacent avantageusement le sucre dans la préparation. Ce dernier ne peut pas être remplacé tout simplement, de manière intuitive, par seulement des maltodextrines sans qu'il en résulte une perte des propriétés de structure du produit fini (voir exemple 2 ci-après).

Le blanc d'oeuf est un produit naturel et sa constitution peut donc varier en fonction de la provenance. Il est constitué à environ 90% d'eau. Parmi les autres constituants, on trouve des protéines dont la principale est l'ovalbumine (plus de 50% de toutes les protéines).

Les protéines moussantes sont des protéines qui permettent de former une mousse similaire à la neige de blanc d'oeuf battu. Ces protéines moussantes sont de préférence choisies dans le groupe constitué de la β-lactogobuline, de l'α-lactalbumine, de la lactoferrine, de la patatine ou de leurs mélanges. Les trois premières protéines sont des protéines issues du lait de vache tandis que la dernière protéine est extraite de la patate douce et a été décrite entre autres par William D Park et al dans un article paru dans Plant Physiol. (1983) 71, 156-160.

Selon un autre mode de réalisation, on propose une pâte pour pâtisserie qui, en outre des ingrédients mentionnés ci-dessus, comprend entre 0,5 et 10 g d'amidon pour 100g de blanc d'oeuf mis en oeuvre.

Selon un autre mode de réalisation, on propose une pâte pour pâtisserie qui, en outre des ingrédients mentionnés ci-dessus, comprend des concentrations élevées en maltodextrine à savoir entre 35 et 110 g de maltodextrine et des concentrations faibles en sucre à savoir entre 0,5 et 5 g de sucre glace (saccharose pilé), de glucose cristallisé, de fructose cristallisé et/ou leur mélange. Cette pâte est la clef de la réalisation de macarons à coques « salées ».

Selon un autre mode de réalisation, on propose une pâte pour pâtisserie qui, en outre des ingrédients mentionnés ci-dessus, comprend entre 0,5 et 4 g d'amidon, entre 1 à 3g de glucose, entre 25 à 50 g de maltodextrines (équivalent dextrose 16,5-19,5) et entre 30 et 70 g de sucre glace (saccharose pilé), de glucose cristallisé, de fructose cristallisé et/ou leur mélange. Cette pâte est particulièrement utile pour la préparation de macarons « à teneur réduite en sucre » (ou de meringues « à teneur réduite en sucre ») par rapport aux produits traditionnels qui comprennent en général deux fois plus de sucre que de blanc d'oeuf.

En fonction du résultat escompté, il est possible d'ajouter en outre entre 0,1 à 0,5 g d'un agent gélifiant pour 100 g de blanc d'oeuf mis en oeuvre.

Pour varier les produits obtenus et afin d'obtenir des produits de type « macaron », on peut ajouter à la pâte pour pâtisserie entre 90 et 160 g de poudre de fruits à coque pour 100 g de blanc d'oeuf mis en oeuvre.

Afin d'obtenir un meilleur résultat, le blanc d'oeuf et la β-lactogobuline, l'α-lactalbumine, la lactoferrine, la patatine ou leurs mélanges sont battus en neige avant ou pendant l'ajout des autres ingrédients.

L'invention concerne également un procédé de fabrication de pâtisserie dans lequel on ajoute la β-lactogobuline, l'α-lactalbumine, la lactoferrine, la patatine ou leurs mélanges au blanc d'oeuf et le mélange ainsi obtenu est battu en neige de manière traditionnelle. Les autres ingrédients y sont ajoutés avant, pendant ou après l'obtention de la neige et le mélange est cuit au four de manière traditionnelle. La pâte est ensuite cuite au four à des températures comprises entre 80°C et 120°C pendant 45 à 90 minutes.

### Description d'exécutions préférées

D'autres particularités et caractéristiques de l'invention ressortiront de la description détaillée de modes de réalisation avantageux présentés ci-dessous, à titre d'illustration, en se référant aux figures annexés. Ceux-ci montrent:
Fig.1 : Une photo d'une coque de macaron salée selon l'invention
Fig.2: Une photo d'une coque de macaron salée non conforme

Un des grands avantages de l'invention est de proposer une pâte de meringues ou de macarons dans laquelle tout ou une partie du sucre mis en oeuvre pour la fabrication a été remplacée par un ensemble d'ingrédients comprenant notamment une protéine moussante ajoutée au blanc d'oeuf traditionnel. Des agents de texture dérivés de polysaccharides tels que l'amidon, des maltodextrines, des glucides simples comme le saccharose et le glucose, ainsi qu'une quantité variable de chlorure de sodium peuvent également être ajoutés.

Toutes les préparations proposées sont par ailleurs particulières en cela qu'elles autorisent de ne pas réaliser la préparation intermédiaire des oeufs en meringues. Les oeufs sont montés en neige avec le chlorure de sodium et les protéines moussantes, mais ils ne sont plus rendus fermes par l'ajout de sucre. Il est possible d'utiliser le sucre glace à cette étape du procédé, mais il est préférable de mélanger et tamiser ce dernier avec la poudre d'amande et les autres ingrédients dans le second pré-mélange (mélange de poudre) décrit précédemment. De manière très surprenante, l'absence de « meringuage » des oeufs n'empêche pas, dans le cadre de l'invention, l'obtention de coques présentant toutes les propriétés organoleptiques et de forme requises. Ces formulations permettent de réaliser des produits dont le goût sucré peut être totalement masqué, de faire ressortir un goût salé ou de préparer des macarons à teneur réduite en sucre. Outre ces qualités organoleptiques particulières, certains des produits ainsi réalisés peuvent être intéressants du point de vue diététique car ils peuvent contenir une quantité de sucre comprise entre 0% et 25% de la masse totale mise en oeuvre, contrairement aux recettes traditionnelles qui contiennent de 30 à 50% sur base du produit fini.

Par protéine moussante, on entend la β-lactoglobuline, l'α-lactalbumine, ou la lactoferrine, des protéines mineures du lait, issues du lactosérum de fromagerie ou d'une préparation spécifique du lait, lui permettant de maintenir intactes ses propriétés physicochimiques ou bien la patatine.

La β-lactoglobuline possède un pouvoir moussant important et une température de dénaturation voisine de 70°C (De Wit et Swinkels, 1980). La température de dénaturation de la β-lactoglobuline n'est pas très éloignée de celle de l'ovalbumine, laquelle est de 58°C, ce qui permet à la β-lactoglobuline de coaguler dans les conditions de cuisson d'une meringue ou d'un macaron notamment.

La concentration préférée de la β-lactoglobuline, l'α-lactalbumine, la lactoferrine, la patatine ou leurs mélanges est comprise entre 2g et 10g par 100 g de blanc d'oeuf mise en oeuvre pour réaliser un macaron.

Il a été constaté que la solubilité de la β-lactoglobuline est multipliée par 60 entre l'eau pure et une solution 0,1 M de chlorure de sodium (0,58%). Cette particularité permet l'utilisation de chlorure de sodium dans les préparations selon l'invention en quantités préférées comprises entre 0,2 et 2g par 100 g de blanc d'oeuf mis en oeuvre, tout en préservant la sapidité souhaitée.

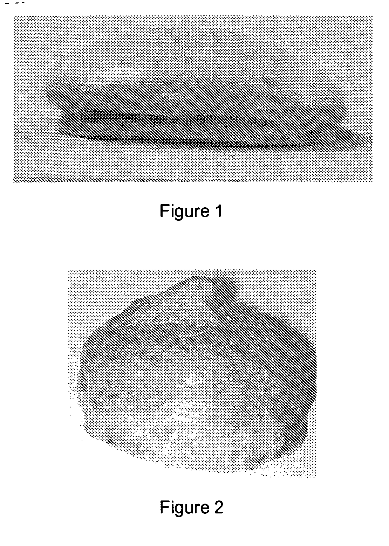

Depuis plusieurs dizaines d'années, les chefs pâtissiers cherchent à obtenir une formulation de pâte à faible teneur en sucre afin de permettre notamment la production de macarons salés. Cependant, il n'existe sur le marché aucun produit car aucune formulation acceptable réalisée. Tous les formulateurs se heurtent à un problème majeur lié au fait que le sucre est indispensable à la structuration et à l'aspect du produit (dôme avec collerette). Pour aboutir à la formulation décrite ci-après un plan de mélange complet a été développé. Dans tout le champ d'expérimentation, seule les formules proposées ci-après permettent d'obtenir un macaron salé acceptable du point de vue de l'aspect et de la structure générale. Cette découverte d'une formulation permettant d'obtenir un macaron salé est très inattendue car l'état de la technique affirmait l'impossibilité d'obtenir un macaron structuré (ou une meringue) à faible teneur en sucre. La figure 1 présente un macaron salé produit dans le champs de formulation acceptable comme défini dans la présente invention (exemple 1) alors que la figure 2 présente un macaron salé produit hors de ce même champ de formulation (exemple 2).

Pour réaliser un macaron salé ou une meringue salée et/ou à teneur réduite en sucre, on peut procéder de la manière suivante :

**Exemple 1 : macarons salés**

A 100 g de blanc d'oeuf frais ou à leur équivalent déshydraté et reconstitué dans de l'eau, on ajoute entre 2 et 10g de β-lactogobuline, de l'α-lactalbumine, de la lactoferrine et de la patatine ou de leurs mélanges de pureté minimale supérieure à 85%, de préférence 90 à 100%.

Le mélange est maintenu sous agitation très modérée en évitant la formation de mousse pendant une durée comprise entre 15 et 180 minutes, de préférence 45 à 75 minutes, de façon à permettre l'hydratation et le gonflement indispensables des protéines moussantes.

Le mélange est battu en neige très ferme, puis on ajoute entre 35 et 110 g de maltodextrine (équivalent dextrose 16,5-19,5). Du sucre glace (saccharose pilé), du glucose cristallisé, du fructose cristallisé et/ou leur mélange sont ajoutés en proportions préférées comprises entre 0,5 et 5 g par 100 g de blanc d'oeuf mise en oeuvre.

On ajoute 0,2 à 2 g de chlorure de sodium. On ajoute ensuite entre 90 et 160 g de poudre de fruits à coque (amandes, noisettes, pignons de pin, noix de cajou, etc.), la quantité préférée étant choisie entre 100 g et 120 g, afin de réaliser l'opération dite de macaronage. Les opérations de moulage, d'attente (croûtage) et de cuisson sont réalisées selon les méthodes traditionnelles.

On peut avantageusement ajouter au mélange une quantité adéquate de condiments, colorants et aromates divers susceptibles de conférer au produit les propriétés organoleptiques désirées.

Les macarons salés résultant de la cuisson sont mis à refroidir à température ambiante afin de terminer la phase de ressuage.

La mesure de l'activité de l'eau des produits est comprise entre 0,53 et 0,78 selon la nature et la quantité des ingrédients ajoutés au mélange initial, sachant que la β-lactoglobuline ou les autres protéines moussantes n'ont qu'un effet négligeable sur l'activité de l'eau du produit final.

Une manière préférée de réaliser le produit consiste en un dosage des ingrédients réalisé de telle façon que son activité de l'eau finale soit comprise entre 0,70 et 0,76 en utilisant les formules de prédiction de l'activité de l'eau pour la réalisation d'aliments à humidité intermédiaire (Grover, 1947 ; Ross, 1975 ; Hardy et Steinberg, 1984 ; Roa et Tapia, 1998).

Les macarons obtenus selon cet exemple peuvent être garnis d'un fourrage à caractère salé, par exemple à base de foie gras, de poisson fumé, de jambon, de fromage, etc., de préférence sous forme de broyats contenant des ingrédients tels que sels neutres, glucides simples, polyols, acides organiques et acides aminés, permettant de conférer audit fourrage une activité de l'eau aussi proche que possible de celle du macaron salé. Le produit cuit conditionné peut subir une opération de congélation, puis de décongélation suivie d'une ouverture de l'emballage à température ambiante, sans risque de reprise d'humidité et lui permettant de conserver ses propriétés organoleptiques initiales pendant une durée compatible avec sa consommation habituelle. Le produit peut éventuellement être conditionné hermétiquement, sous atmosphère protectrice, sans que cela ne modifie ses propriétés organoleptiques d'une quelconque manière.

Des macarons salés peuvent facilement être réalisés à l'intérieur des fourchettes décrites ci-dessus. A l'aide du mode opératoire décrit, des macarons salés ont été obtenus dans les conditions suivantes (par 100 g de blanc d'oeuf) :
- 8 g de β-lactogobuline ou de patatine ou d'un mélange
- 3 g de sucre glace (saccharose pilé)
- 2 g de chlorure de sodium
- 100 g de poudre d'amandes
- 2 g d'un mélange de poudres de tomate, de cumin et de poivrons
- 50 g de maltodextrine (équivalent dextrose 16,5-19,5)
- agitation très modérée en évitant la formation de mousse pendant une durée de 25 minutes

La mesure de l'activité de l'eau (AW) du produit final est comprise entre 0,710 et 0,730.

**Exemple 2 : : formulation de macaron salé aboutissant à un produit non-conforme.**

100 g de blanc d'oeuf frais ou à leur équivalent déshydraté et reconstitué dans de l'eau sont directement battus en neige très ferme, puis on ajoute entre 35 et 110 g de maltodextrine (équivalent dextrose 16,5-19,5). Du sucre glace (saccharose pilé), du glucose cristallisé, du fructose cristallisé et/ou leur mélange sont ajoutés en proportions préférées comprises entre 0,5 et 5 g de la quantité de blanc d'oeuf mise en oeuvre.

On ajoute 0,2 à 2 g de chlorure de sodium. On ajoute ensuite de la poudre de fruits à coque (amandes, noisettes, pignons de pin, noix de cajou, etc.), de manière à ce que la quantité représente environ 20% en masse du mélange. Les opérations de macaronage, moulage, d'attente (croûtage) et de cuisson sont réalisées selon les méthodes traditionnelles.

On peut éventuellement ajouter au mélange une quantité adéquate de condiments, colorants et aromates divers susceptibles de conférer au produit les propriétés organoleptiques désirées.

Les macarons salés résultant de la cuisson sont mis à refroidir à température ambiante afin de terminer la phase de ressuage.

La figure 2 présentée correspond aux conditions de formulation suivantes (par 100 g de blanc d'oeuf) :
- 3 g de sucre glace (saccharose pilé)
- 2 g de chlorure de sodium
- 40 g de poudre d'amandes
- 60 g de maltodextrine (équivalent dextrose 16,5-19,5)

On constate que ce produit a un aspect non conforme.

### Exemple 3 :macarons à teneur réduite en sucre.

A 100 g de blanc d'oeuf frais ou à leur équivalent déshydraté et reconstitué dans de l'eau, on ajoute entre 2 et 10 g de β-lactogobuline, de l'α-lactalbumine, de la lactoferrine et de la patatine ou de leurs mélanges, avantageusement 8g, de pureté minimale supérieure à 85%, de préférence 90 à 100%.

Le mélange est maintenu sous agitation très modérée en évitant la formation de mousse pendant une durée comprise entre 15 minutes et 180 minutes, de préférence 45 à 75 minutes de façon à permettre l'hydratation et le gonflement indispensables de la β-lactogobuline.

Le mélange est monté en neige très ferme, puis de l'amidon en quantité comprise entre 0,5 et 4 g est ajouté, ainsi que 25 à 50 g de maltodextrines (équivalent dextrose 16,5-19,5).

Du saccharose ou du sucre glace (saccharose pilé) est ajouté en quantité comprise entre 30 et 70g de la masse initiale de blanc d'oeuf, la quantité préférée étant de 55g, et 1 à 3g de glucose par rapport à la masse initiale de blanc d'oeuf, sont additionnés au mélange. On ajoute ensuite entre 90 et 160 g de poudre de fruits à coque (amandes, noisettes, pignons de pin, noix de cajou, etc.), la quantité préférée étant choisie entre 100 g et 120 g, afin de réaliser l'opération dite de macaronage. Une manière préférée de réaliser le produit consiste en un dosage des ingrédients réalisé de telle façon que son activité de l'eau finale soit comprise entre 0,53 et 0,85 en utilisant les formules de prédiction mentionnées dans l'exemple 1. Les opérations de moulage, d'attente (croûtage) et de cuisson sont réalisées selon les méthodes traditionnelles.

Les macarons obtenus selon cet exemple peuvent être garnis d'un fourrage à base sucrée, par exemple des fruits secs ou confits, confiture, crème de marrons, crème au beurre, crème pâtissière, etc. de préférence sous forme de broyats ou mélanges contenant des ingrédients tels que glucides simples et polyols, permettant de conférer audit fourrage une activité de l'eau aussi proche que possible de celle du macaron à teneur réduite en sucre. Le produit cuit conditionné peut subir une opération de congélation, puis de décongélation suivie d'une ouverture de l'emballage à température ambiante, sans risque de reprise d'humidité et lui permettant de conserver ses propriétés organoleptiques initiales pendant une durée compatible avec sa consommation habituelle. Le produit peut éventuellement être conditionné hermétiquement, sous atmosphère protectrice, sans que cela ne modifie ses propriétés organoleptiques d'une quelconque manière.

Des macarons à teneur réduite en sucre peuvent facilement être réalisés à l'intérieur des fourchettes décrites ci-dessus. A l'aide du mode opératoire décrit, des macarons à teneur réduite en sucre ont été obtenus dans les conditions suivantes (par 100 g de blanc d'oeuf) :.
- 8 g de β-lactogobuline, de l'α-lactalbumine ou de leurs mélanges
- 4 g d'amidon
- 25 g de maltodextrines
- 55 g de saccharose ou du sucre glace
- 3 g de glucose
- 0.75 g de chlorure de sodium
- 100 g de poudre de noisettes
- agitation très modérée en évitant la formation de mousse pendant une durée de 25 minutes

Le mélange ci-dessus permet d'obtenir une aw de 0,710.

**Exemple 4 : « Meringues salées »**

A 100 g de blanc d'oeuf frais ou à leur équivalent déshydraté et reconstitué dans de l'eau, on ajoute entre 2 et 10g de la β-lactogobuline de l'α-lactalbumine, de la lactoferrine, de la patatine ou leurs mélanges de pureté minimale supérieure à 85%, de préférence 90 à 100%.

Le mélange est maintenu sous agitation très modérée en évitant la formation de mousse pendant une durée comprise entre 15 minutes et 180 minutes, de préférence 45 à 75 minutes de façon à permettre l'hydratation et le gonflement indispensables des protéines moussantes.

On ajoute 0,1 à 0,5 g d'un agent gélifiant, de préférence de la gomme xanthane (E 415).

Le mélange est battu en neige très ferme, puis de l'amidon en quantité comprise entre 1 et 8 g pour 100 g de blanc d'oeuf est ajouté. On ajoute ensuite entre 35 et 110 g de maltodextrine (équivalent dextrose 16,5-19,5), du sucre glace (saccharose pilé), du glucose cristallisé, du fructose cristallisé et/ou leur mélange en proportions préférées comprises entre 1 et 5 g de la quantité de blanc d'oeuf mise en oeuvre.

On ajoute 0,2 à 2g de chlorure de sodium et/ou des herbes, aromates divers et colorants alimentaires en proportions compatibles avec une perception organoleptique suffisante. Le mélange est façonné et cuit selon les méthodes traditionnelles. On obtient un produit dont les propriétés de conservation à la température ambiante sont identiques à celles des meringues traditionnelles (6 mois).

Des meringues salées peuvent facilement être réalisées à l'intérieur des fourchettes décrites ci-dessus. A l'aide du mode opératoire décrit, des meringues salées ont été obtenues dans les conditions suivantes (par 100 g de blanc d'oeuf) :
- 3 g de β-lactogobuline ou de lactoferrine ou de leurs mélanges
- 0.3 g gomme xanthane (E 415),
- 3 g d'amidon
- 60 g de maltodextrine
- 2 g de fructose cristallisé
- 2 g de chlorure de sodium
- agitation très modérée en évitant la formation de mousse pendant une durée de 60 minutes.

**Exemple 5 : meringues à teneur réduite en sucre**

A 100 g de blanc d'oeuf frais ou à leur équivalent déshydraté et reconstitué dans de l'eau, on ajoute entre 2 et 10g de β-lactogobuline, avantageusement 8g, de pureté minimale supérieure à 85%, de préférence 90 à 100%.

Le mélange est maintenu sous agitation très modérée en évitant la formation de mousse pendant une durée comprise entre 15 minutes et 180 minutes, de préférence 45 à 75 minutes de façon à permettre l'hydratation et le gonflement indispensables de la β-lactogobuline.

On ajoute 0,1 à 0,5 g d'un agent gélifiant, de préférence de la gomme xanthane (E 415).

Le mélange est monté en neige très ferme, puis de l'amidon en quantité comprise entre 0,5 et 4 g est ajouté, ainsi que 25 à 50 g de maltodextrines (équivalent dextrose 16,5-19,5). Du saccharose ou du sucre glace (saccharose pilé) est ajouté en quantité comprise entre 30 et 70 g de la masse initiale de blanc d'oeuf, la quantité préférée étant de 55g et 1 à 3g de glucose par rapport à la masse initiale de blanc d'oeuf sont additionnés au mélange.

Le mélange est façonné et cuit selon les méthodes traditionnelles. On obtient un produit dont les propriétés de conservation à la température ambiante sont identiques à celles des meringues traditionnelles (6 mois).

Des meringues à teneur réduite en sucre peuvent facilement être réalisées à l'intérieur des fourchettes décrites ci-dessus. A l'aide du mode opératoire décrit, des meringues à teneur réduite en sucre ont été obtenues dans les conditions suivantes (par 100 g de blanc d'oeuf) :.
- 6 g de β-lactogobuline
- 0.3 g gomme xanthane (E 415).
- 2 g d'amidon
- 35 g de maltodextrines
- 50 g de saccharose ou du sucre glace
- 1.25 g de chlorure de sodium
- agitation très modérée en évitant la formation de mousse pendant une durée de 35 minutes

### Bibliographie

PALMER (A.H.), 1934. The preparation of a crystalline globulin from the albumin fraction of cow's milk. J. Biol. Chem., 104, 359-372
PARK WILLIAM D.et al, 1983 Analysis of the Heterogeneity of the 40,000 Molecular Weight Tuber Glycoprotein of Potatoes by Immunological Methods and by NH2-Terminal Sequence Analysis. Plant Physiol. (1983) 71, 156-160
De WIT (J.N.), SWINKELS (G.A.M.), 1980 A differential scanning calorimetry study of the thermal denaturation of bovine b-lactoglobulin. Biochem .Biophys. Acta, 624, 40-50
Ross, K.D. 1975. Estimation of water activity in intermediate moisture foods. Food Technol., 29, (3), 26-33.
Hardy, J., Steinberg, M.P. 1984. Introduction between sodium chloride and paracasein as determined by water sorption. J. Food Sci., 49, 127-131,136
Roa V., Tapia, M.S. 1998. Estimating water activity in systems containing multiple solutes based on solute properties. J. Food Sci., 63, 4, 559-564.

## Revendications

1. Pâte pour pâtisseries de type meringue ou macaron, comprenant pour 100g de blanc d'oeuf :
• entre 25 et 110 g de maltodextrine ;
• entre 2 et 10 g de protéine moussante choisi dans le groupe constitué de la β-lactoglobuline, de l'α-lactalbumine, de la lactoferrine et de la patatine ou de leurs mélanges,
• entre 0,5 et 70 g de sucre glace (saccharose pilé), de glucose cristallisé, de fructose cristallisé et/ou leur mélange,
• 0,2 à 3 g de chlorure de sodium et,
• optionnellement entre 90 et 160g de poudre d'amandes ;

2. Pâte pour pâtisseries selon la revendication 1, **caractérisée en ce qu'**elle comprend en outre entre 0,5 et 10 g d'amidon pour 100g de blanc d'oeuf mis en oeuvre.

3. Pâte pour pâtisseries selon l'une quelconque des revendications précédentes, **caractérisée en ce qu'**elle comprend en outre entre 1 à 3 g de glucose pour 100g de blanc d'oeuf mis en oeuvre.

4. Pâte pour pâtisseries selon l'une quelconque des revendications précédentes, **caractérisée en ce qu'**elle comprend en outre entre 0,1 à 0,5 g d'un agent gélifiant pour 100 g de blanc d'oeuf mis en oeuvre.

5. Pâte pour pâtisseries selon l'une quelconque des revendications précédentes, **caractérisée en ce qu'**elle comprend en outre
• entre 0,5 et 4 g d'amidon,
• entre 25 à 50 g de maltodextrines (équivalent dextrose 16,5-19,5),
• entre 30 et 70 g de sucre glace (saccharose pilé), de glucose cristallisé, de fructose cristallisé et/ou leur mélange,
• entre 1 à 3 g de glucose.

6. Pâte pour pâtisseries selon l'une quelconque des revendications précédentes, **caractérisée en ce qu'**elle comprend en outre entre 90 et 160 g de poudre de fruits à coque autre que la poudre d'amande pour 100 g de blanc d'oeuf mis en oeuvre.

7. Pâte pour pâtisseries selon l'une quelconque des revendications précédentes, **caractérisée en ce que** le blanc d'oeuf et la protéine moussante sont battus en neige.

8. Pâte pour pâtisseries selon la revendication 7, **caractérisée en ce que** les blancs battus en neige sont « merringués » avec le sucre glace.

9. Procédé de fabrication de pâte pour pâtisseries telles que revendiquées dans les revendications 1 à 8, **caractérisé en ce qu'**on ajoute la protéine moussante au blanc d'oeuf et **en ce que** le mélange est battu en neige, les autres ingrédients y sont ajoutés et le mélange est cuit au four.

10. Procédé de fabrication de pâte pour pâtisseries selon la revendication 9, **caractérisé en ce que** le mélange de protéine moussante et de blanc d'oeuf est agité de façon modérée en évitant la formation de mousse pendant une durée comprise entre 15 et 180 minutes, de préférence 25 à 75 minutes avant l'ajout des autres ingrédients.

11. Macaron obtenu à partir d'une pâte pour pâtisseries selon l'une des revendications 1 à 8.

12. Meringue obtenue à partir d'une pâtes pour pâtisserie selon l'une des revendications 1 à 8

## Claims

1. Pastry dough for pastries of the meringue or macaroon type, comprising for 100 g of egg white:
• between 25 and 110 g of maltodextrin;
• between 2 and 10 g of foaming protein selected from the group consisting of β-lactoglobulin, α-lactalbumin, lactoferrin and patatin or mixtures thereof,
• between 0.5 and 70 g of icing sugar (ground saccharose), crystallised glucose, crystallised fructose and/or their mixture,
• 0.2 to 3 g of sodium chloride and,
• optionally between 90 and 160 g of powdered almonds;

2. Pastry dough for pastries according to claim 1, **characterised in that** it additionally comprises between 0.5 and 10 g of starch for 100 g of employed egg white.

3. Pastry dough for pastries according to one of the previous claims, **characterised in that** it additionally comprises between 1 and 3 g of glucose for 100 g of employed egg white.

4. Pastry dough for pastries according to one of the previous claims, **characterised in that** it additionally comprises between 0.1 and 0.5 g of a gelling agent for 100 g of employed egg white.

5. Pastry dough for pastries according to one of the previous claims, **characterised in that** it additionally comprises
• between 0.5 and 4 g of starch,
• between 25 to 50 g of maltodextrins (dextrose equivalent 16.5-19.5),
• between 30 and 70 g of icing sugar (ground saccharose), crystallised glucose, crystallised fructose and/or their mixture,
• between 1 to 3 g of glucose.

6. Pastry dough for pastries according to one of the previous claims, **characterised in that** it additionally comprises between 90 and 160 g of powdered nuts, other than powdered almonds, for 100 g of employed egg white.

7. Pastry dough for pastries according to one of the previous claims, **characterised in that** the egg white and the foaming protein are whipped up.

8. Pastry dough for pastries according to claim 7, **characterised in that** the whipped up egg whites are "meringued" with icing sugar.

9. Method for making pastries as claimed in claims 1 to 8, **characterised in that** the foaming protein is added to the egg white and that the mixture is whipped up, the other ingredients are added and the mixture is baked in the oven.

10. Method for making pastries according to claim 9, **characterised in that** the mixture of foaming protein and egg white is beaten moderately, avoiding the formation of foam, for a period comprised between 15 and 180 minutes, preferably 25 to 75 minutes, before the other ingredients are added.

11. Macaroon obtained from a pastry dough for pastries according to one of claims 1 to 8.

12. Meringue obtained from a pastry dough for pastries according to one of claims 1 to 8.

## Patentansprüche

1. Teig für Backwaren des Baiser- oder Makronentyps, der auf 100 g Eiweiß Folgendes umfasst:
• zwischen 25 und 110 g Maltodextrin,
• zwischen 2 und 10 g Proteinschaum, der aus der Gruppe bestehend aus β-Lactoglobulin, α-Lactalbumin, Lactoferrin und Patatin oder deren Gemischen ausgewählt ist,
• zwischen 0,5 und 70 g Puderzucker (zerstoßene Saccharose), kristallisierte Glukose, kristallisierte Fruktose und/oder von deren Gemisch,
• 0,2 bis 3 g Natriumchlorid und
• gegebenenfalls zwischen 90 und 160 g Mandelmehl.

2. Teig für Backwaren nach Anspruch 1, **dadurch gekennzeichnet, dass** er außerdem auf eingesetzte 100 g Eiweiß zwischen 0,5 und 10 g Stärke umfasst.

3. Teig für Backwaren nach einem der vorhergehenden Ansprüche, **dadurch gekennzeichnet, dass** er außerdem auf eingesetzte 100 g Eiweiß zwischen 1 und 3 g Glukose umfasst.

4. Teig für Backwaren nach einem der vorhergehenden Ansprüche, **dadurch gekennzeichnet, dass** er außerdem auf eingesetzte 100 g Eiweiß zwischen 0,1 und 0,5 g eines Geliermittels umfasst.

5. Teig für Backwaren nach einem der vorhergehenden Ansprüche, **dadurch gekennzeichnet, dass** er außerdem Folgendes umfasst:
• zwischen 0,5 und 4 g Stärke,
• zwischen 25 und 50 g Maltodextrine (entspricht 16,5 - 19,5 Dextrose),
• zwischen 30 und 70 g Puderzucker (zerstoßene Saccharose), kristallisierte Glukose, kristallisierte Fruktose und/oder von deren Gemisch,
• zwischen 1 bis 3 g Glukose.

6. Teig für Backwaren nach einem der vorhergehenden Ansprüche, **dadurch gekennzeichnet, dass** er außerdem auf eingesetzte 100 g Eiweiß zwischen 90 und 160 g eines Schalenfruchtmehls, bei dem es sich nicht um Mandelmehl handelt, umfasst.

7. Teig für Backwaren nach einem der vorhergehenden Ansprüche, **dadurch gekennzeichnet, dass** das Eiweiß und der Proteinschaum zu Schnee geschlagen werden.

8. Teig für Backwaren nach Anspruch 7, **dadurch gekennzeichnet, dass** die zu Schnee geschlagenen Eiweiße mit dem Puderzucker "Zu Baiser verarbeitet" werden.

9. Verfahren zur Herstellung eines Teigs für Backwaren, wie den in den Ansprüchen 1 bis 8 beanspruchten, **dadurch gekennzeichnet, dass** der Proteinschaum dem Eiweiß zugegeben wird und dass das Gemisch zu Schnee geschlagen wird, die anderen Bestandteile zugegeben werden und das Gemisch im Ofen gebacken wird.

10. Verfahren zur Herstellung eines Teigs für Backwaren nach Anspruch 9, **dadurch gekennzeichnet, dass** das Gemisch des Proteinschaums und des Eiweißes für einen Zeitraum zwischen 15 und 180 Minuten, vorzugsweise 25 bis 75 Minuten vor der Zugabe der anderen Bestandteile mäßig gerührt wird, um die Bildung von Schaum zu verhindern.

11. Makrone, die aus einem Teig für Backwaren nach einem der Ansprüche 1 bis 8 erhalten wird.

12. Baiser, der aus einem Teig für Backwaren nach einem der Ansprüche 1 bis 8 erhalten wird.
